# EUROPÄISCHE PATENTSCHRIFT

(11) **EP 0 873 895 B1**
(45) Veröffentlichungstag und Bekanntmachung des Hinweises auf die Patenterteilung: **04.06.2003**
(21) Anmeldenummer: 98104581.8
(22) Anmeldetag: 13.03.1998
(51) Int. Cl.: B60J 1/00

(54) **Fahrzeugfenster mit einer ein eingeformtes Randprofil aufweisenden Kunststoffscheibe**
Vehicle window with a plastic sheet provided with an integrated border section
Fenêtre de véhicule avec vitre en plastique pourvue d'un profilé de bordure intégré

(30) Priorität: 26.04.1997 DE 19717784
(43) Veröffentlichungstag der Anmeldung: 28.10.1998
(73) Patentinhaber: Volkswagen Aktiengesellschaft, 38436 Wolfsburg (DE)
(72) Erfinder: Hacker, Roland, Dipl.-Ing., 38518 Gifhorn (DE)

(56) Entgegenhaltungen:
- DE-A- 2 847 404
- GB-A- 2 093 104
- US-A- 5 085 021
- PATENT ABSTRACTS OF JAPAN vol. 014, no. 540 (M-1053), 29. November 1990 (1990-11-29) -& JP 02 227319 A (HASHIMOTO FORMING IND CO LTD), 10. September 1990 (1990-09-10)

## Beschreibung

Die Erfindung betrifft ein Fahrzeugfenster gemäß dem Oberbegriff des Patentanspruchs. Unter einem Karosserieflansch soll im Rahmen der Erfindung auch ein Flansch an einem Türrahmen verstanden sein.

Die moderne Technik der Kunststoffscheiben (Polycarbonatscheiben) bietet die vorteilhafte Möglichkeit, mit relativ einfachen Fertigungseinrichtungen Scheiben herzustellen, die relativ zur eigentlichen Scheibenfläche senkrecht verlaufende Bereiche aufweisen, also in starkem Maße dreidimensional sind. So zeigt die gattungbildende DE-OS 28 47 404 ein Fahrzeugfenster mit einer Kunststoffscheibe, die einen abgekröpften Randbereich aufweist, der, von der eigentlichen Scheibenfläche ausgehend, nach innen versetzt ist und in ein im Querschnitt U-förmiges Dichtungsprofil hineinragt, das seinerseits in eine U-förmige Aufnahme am Türrahmen eingesetzt ist. Infolge der Abkröpfung ist trotz des U-förmigen Dichtungsprofils sichergestellt, daß die nach außen weisende Fläche der Scheibe mit der Außenfläche des Türrahmens fluchtet, was bei Fahrzeugen im Hinblick auf die Vermeidung von Fahrtwindgeräuschen angestrebt wird.

Nachteilig bei diesem bekannten Fahrzeugfenster sind einerseits die relativ komplizierten Teile zur dichten Festlegung der Scheibe an der Fahrzeugkarosserie (Fahrzeugtür) und andererseits die Tatsache, daß der äußere Anblick des Fahrzeugs im Bereich des Scheibenrandes unter ästhetischen Geschichtspunkten unbefriedigend ist. So liegen neben der Scheibe Teile aus Gummi und Metall (Karosserieflansch) offen zu Tage, d. h. man hat zumindest zwei Materialübergänge, nämlich von Scheibenmaterial zu Gummi und von Gummi zum Metall des Karosserieflansches, wodurch außerdem eine Vielzahl wenn auch kleiner äußerer Fugen entsteht.

Der Erfindung liegt die Aufgabe zugrunde, unter Ausnutzung der Möglichkeiten der Gestaltung von Kunststoffscheiben ein gattungsgemäßes Fahrzeugfenster zu schaffen, das mit relativ einfachen, Kleber vermeidenden Mitteln zur dichten Festlegung der Scheibe an dem Karosserieflansch auskommt und außenseitig nur einen einzigen Materialsprung, nämlich von der Scheibe zum Karosserieflansch, zeigt.

Die erfindungsgemäße Lösung dieser Aufgabe besteht in den kennzeichnenden Merkmalen des Patentanspruchs.

Schlagwortartig kann man also die Querschnittsform des Randbereichs der Scheibe als U bezeichnen, dessen innerer Schenkel gleichsam "rückwärts" weist, während sein äußerer Schenkel durch den Hauptbereich der Scheibe gebildet ist. Dies ermöglicht zur Festlegung die Verwendung einer sehr einfach gestalteten, nämlich ebenfalls einen U-förmigen Querschnitt besitzenden Halteklammer, deren einer Schenkel in den U-förmigen Querschnitt des Scheibenrandbereichs hineinragt, während ihr innerer Schenkel den Karosserieflansch hintergreift. Eine derartige Halteklammer kann aus elastischem Material hergestellt werden, so daß sie ohne Verwendung eines Klebers den sicheren Zusammenhalt zwischen Scheibe und Karosserieflansch wahrt, zumal im Betrieb keine Kräfte in Abzugsrichtung der Halteklammer (parallel zur eigentlichen Scheibenfläche) wirken.

Vorteilhaft sind bei der Erfindung die einfache Montage (die Scheibe wird mit dem inneren Schenkel ihres U-förmigen Randbereichs unter Zwischenfügung des Dichtprofils gegen den Karosserieflansch gedrückt und die Halteklammer aufgesteckt) sowie Demontage (Abziehen der Halteklammer), wodurch auch die Versicherungskosten für das Fahrzeug positiv beeinfiußt werden. Eine Verletzung eines Korrosionsschutzes ist bei der Demontage nicht zu befürchten. Da der Einsatz eines Klebers für irgendeines der genannten Teile vermieden ist, erübrigen sich die hohen Investitionen für automatische Kleberauftragseinrichtungen.

Da weiterhin die Halteklammer auf der Innenseite der Scheibe liegt, sind sowohl sie als auch das Dichtprofil von der Scheibe überdeckt, die gegebenenfalls dort zwecks Unsichtbarmachung von Halteklammer und Dichtprofil eingefärbt sein kann.

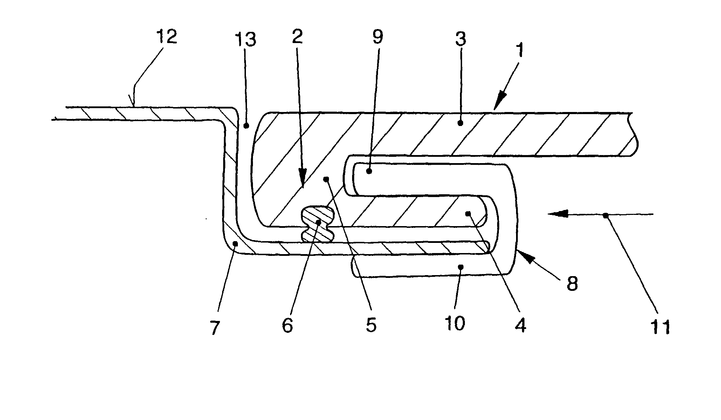

Ein Ausführungsbeispiel wird im folgenden anhand der Zeichnung erläutert, die einen Querschnitt durch das erfindungsgemäße Fahrzeugfenster zeigt.

Die allgemein mit 1 bezeichnete Scheibe besteht aus einem Polycarbonat und damit einem Material, das die Herstellung einer relativ komplizierten Scheibenform mit einfachen Mitteln zuläßt. Diese günstige Eigenschaft derartiger Scheiben ist erfindungsgemäß dazu ausgenutzt, der Scheibe 1 einen Randbereich 2 zu geben, der die Form eines U im Querschnitt besitzt, dessen äußerer Schenkel gleichsam durch den Hauptscheibenbereich 3 gegeben ist, während der Innenschenkel 4 des U parallel zum Hauptscheibenbereich 3 um die Basis 5 des U nach innen versetzt verläuft. Der Innenschenkel 4 stützt sich unter Zwischenlage des Dichtprofils 6 auf dem Karosserieflansch 7 ab, der dort im wesentlichen parallel zum Hauptbereich 3 der Scheibe verläuft.

Zur Festlegung der Scheibe 1 an dem Karosserieflansch 7 dient die Halteklammer 8, die ebenfalls einen U-förmigen Querschnitt besitzt. Ihr Außenschenkel 9 ist von dem U-förmigen Randbereich 2 der Scheibe 1 aufgenommen, während ihr innerer Schenkel 10 den Karosserieflansch 7 hintergreift. Die Montagerichtung der Halteklammer 8 wird demgemäß durch den Pfeil 11 angegeben.

Die Halteklammer 8 besteht zweckmäßigerweise aus einem elastischen Material, so daß sie sich selbst an den Teilen 4 und 7 hält; sie kann mit einer endlichen Kraft zu Reparaturzwecken entgegen dem Pfeil wieder demontiert werden.

Wie schon aus der bisherigen Beschreibung hervorgeht, erübrigt sich bei der Erfindung der Einsatz eines Klebers; auch das Dichtprofil 6 bedarf in keiner derartigen Festlegung. Die Außenfläche des eigentlichen Scheibenbereichs 3 fluchtet mit der Außenfläche 12 der Karosserie, wobei der Spalt 13 zwischen beiden sehr klein gehalten werden kann; dies ist günstig für die Vermeidung von Windgeräuschen. Da sich die Scheibe 1 in der Zeichnung nach links bis unmittelbar vor die dort senkrecht gezeichnete Kante des Karosserieflansch erstreckt, blickt man von außen unmittelbar außer auf das Karosseriematerial nur auf das Scheibenmaterial, so daß der beim Stand der Technik störende mehrfache Materialwechsel fortfällt. Gegebenenfalls kann die Scheibe 1 in ihrem die Halteklammer 8 und das Dichtprofil 6 überdeckenden Bereich eingefärbt sein.

Mit der Erfindung ist demgemäß mit einfachen Mitteln ein gattungsgemäßes Fahrzeugfenster geschaffen, das die definierte Aufgabe in vollkommener Weise löst.

## Patentansprüche

1. Fahrzeugfenster mit einer ein eingeformtes Randprofil aufweisenden Kunststoffscheibe, an dem Mittel zur dichten Befestigung an einem eine Fensterausnehmung begrenzenden Karosserieflansch angreifen, wobei die nach außen weisende Fläche der Scheibe mit der Außenfläche der Karosserie fluchtet, **gekennzeichnet durch** ein im Querschnitt U-förmiges, mit der Basis (5) des U den Umfang der Scheibe (1) bildendes Randprofil (2), wobei der innere Schenkel (4) des U um die Basis (5) gegen die eigentliche Scheibenfläche (3) nach innen versetzt ist und dem inneren Schenkel (4) innenseitig unter Zwischenlage einer Dichtung (6) der Karosserieflansch (7) gegenübersteht, sowie **durch** eine Halteklammer (8) mit ebenfalls U-förmigem Querschnitt, dessen äußerer Schenkel (9) in das U-förmige Randprofil (2) hineinragt, während sein innerer Schenkel (10) den Karosserieflansch (7) innenseitig hintergreift.

## Claims

1. Vehicle window having a plastic pane having an integrated border section on which means for the sealed fastening to a bodywork flange bounding a window recess engage, the outwardly facing surface of the pane being aligned with the outer surface of the bodywork, **characterized by** a cross-sectionally U-shaped border section (2) which, with the base (5) of the U, forms the circumference of the pane (1), the inner limb (4) of the U being offset inwards around the base (5) towards the actual pane surface (3) and the bodywork flange (7) lying opposite the inner limb (4) on the inside with the interposition of a seal (6), and by a retaining clip (8) having a likewise U-shaped cross section, the outer limb (9) of which protrudes into the U-shaped border section (2) while its inner limb (10) grips behind the bodywork flange (7) on the inside.

## Revendications

1. Fenêtre de véhicule avec vitre en plastique pourvue d'un profilé de bordure intégré, avec laquelle des moyens de fixation étanche sur une bride de carrosserie délimitant une ouverture de fenêtre viennent en prise, la face de la vitre tournée vers l'extérieur étant en affleurement avec la face extérieure de la carrosserie, **caractérisée par** un profilé de bordure (2) de section transversale en forme de U, formant avec la base (5) du U le pourtour de la vitre (1), la branche intérieure (4) du U étant décalée vers l'intérieur de la distance de la base (5) par rapport à la face de la vitre (3) proprement dite, et la bride de la carrosserie (7) étant en face de la branche intérieure (4) du côté intérieur en interposant un joint (6), ainsi que par une pince de retenue (8) de section transversale également en forme de U, dont la branche extérieure (9) pénètre dans le profilé de bordure (2) en forme de U, tandis que sa branche intérieure (10) vient en prise par l'arrière du côté intérieur avec la bride de la carrosserie (7).
